# EUROPEAN PATENT APPLICATION

(11) **EP 4 685 013 A1**
(43) Date of publication of application: **28.01.2026**
(21) Application number: 23926999.6
(22) Date of filing: 14.07.2023
(51) Int. Cl.: B60R 11/02

(54) **LIDAR BUILT-IN MOUNTING DEVICE AND VEHICLE**

(71) Applicant: Fuyao Glass Industry Group Co., Ltd., Fuqing, Fujian 350300 (CN)
(72) Inventor: CHEN, Bingjing, Fuqing, Fujian 350300 (CN); WANG, Wenjuan, Fuqing, Fujian 350300 (CN); LI, Weijun, Fuqing, Fujian 350300 (CN); GUAN, Jinliang, Fuqing, Fujian 350300 (CN)
(74) Representative: Herrero & Asociados, S.L.
(86) International application number: PCT/CN2023/107564
(87) International publication number: WO 2024/187653

(57) **Abstract**

The present application relates to a LiDar built-in mounting device and a vehicle. The LiDAR built-in mounting device comprises a mounting bracket (10). The mounting bracket (10) comprises a substrate (11) and a support (12) connected to the substrate (11). The substrate (11) has a first surface (111) and a second surface (112) which are arranged opposite each other. The first surface (111) is configured to fixedly connect to an inner surface of window glass (20), and the support (12) is arranged on the second surface (112). The support (12) is provided with a mounting surface (1211) configured to mount a LiDAR (30).

## Description

### TECHNICAL FIELD

The present application relates to the technical field of lidar mounting, in particular to a lidar built-in installation device and a vehicle.

### BACKGROUND

With the rapid development of autonomous driving technology, according to the standard classification of "Automobile Driving Automation Classification", the level of autonomous driving is divided into L0 (emergency assistance), L1 (partial driving assistance), L2 (combined driving assistance), L3 (conditional autonomous driving), L4 (highly autonomous driving) and L5 (fully autonomous driving). The current trend of industry development is that vehicles above L2 level are mounted with multiple sensors such as cameras and lidar (Light Detection And Ranging).

Lidar can scans the surrounding environment by rapidly and repeatedly emitting laser beams to obtain "point cloud" data that reflects the shape, position, and motion of one or more objects in the surrounding environment. The lidar used in vehicles emits lasers with wavelengths of 905 nm and 1550 nm. The advantage of the laser is that it will not diverge over a long distance due to focusing, but it will not be able to bypass obstacles, and it will be greatly disturbed or even unable to work in rainy, foggy, sandy, windy, etc. weather. Therefore, the trend and demand in the market is to fully integrate the lidar mounted outside the vehicle in the related art into an interior of the vehicle, especially on an inner surface of a front windshield.

### SUMMARY

According to various embodiments of the present application, a lidar built-in mounting device and a vehicle are provided.

A lidar built-in mounting device includes a mounting bracket, the mounting bracket includes a substrate and a support connected to the substrate, the substrate has a first surface and a second surface arranged opposite to each other, the first surface is configured to be fixedly connected to an inner surface of a vehicle window glass, the support is provided on the second surface, and the support is provided with a mounting surface configured for mounting a lidar.

In one embodiment, the support includes a mounting plate and a supporting plate, the supporting plate is fixedly connected between the mounting plate and the substrate, the mounting plate has the mounting surface located on a side of the second surface, and the mounting surface and the second surface form an angle.

In one embodiment, the angle between the mounting surface and the second surface ranges from 15° to 80°.

In one embodiment, the substrate is provided with an avoidance through hole, the mounting plate and the supporting plate enclose an avoidance space in communication with the avoidance through hole.

In one embodiment, the mounting plate and/or the supporting plate is provided with at least one vibration-damping through hole.

In one embodiment, a ratio of an area S1 of the vibration-damping through hole to an area S2 of the mounting surface is between 1/5 and 3/4.

In one embodiment, when a value of a NVH value of the lidar is equal to or greater than 25 db, the ratio of the area S1 of the vibration-damping through hole to the area S2 of the mounting surface is between 1/4 and 3/4.

In one embodiment, when the value of the NVH of the lidar is equal to or greater than 25 db, the ratio of the area S1 of the vibration-damping through hole to the area S2 of the mounting surface is between 1/5 and 2/3.

In one embodiment, the mounting surface is provided with a connecting member configured to fix the lidar on the mounting surface, and the connecting member is a welding member, an adhesive member, or a threaded connecting member.

In one embodiment, the mounting surface is provided with at least one elastic member and/or at least one protrusion configured to abut against the lidar.

In one embodiment, the mounting bracket is provided with a first light shielding cover connected to the substrate, the first light shielding cover is provided on the second surface and protrudes upwards in a direction away from the second surface, the first light shielding cover encloses a light transmission channel, and a detection signal transmitted and received by the lidar pass through the vehicle window glass through the light transmission channel.

In one embodiment, the lidar built-in mounting device further includes a heating member provided on the first light shielding cover.

In one embodiment, the first light shielding cover includes a light shielding bottom plate, and an angle between the light shielding bottom plate and the second surface is less than the angle between the mounting surface and the second surface.

In one embodiment, the lidar built-in mounting device further includes a shielding cover fixedly mounted on the inner surface of the vehicle window glass, and the shielding cover is configured to cover the lidar and the mounting bracket.

In one embodiment, an electronic display screen is provided on an outer wall of the shielding cover.

In one embodiment, the lidar built-in mounting device further includes a connecting base configured for mounting a rearview mirror.

In one embodiment, a minimum distance between a signal transmitting end of the lidar and the inner surface of the vehicle window glass is less than or equal to 8 mm.

In one embodiment, the lidar built-in mounting device further includes a camera bracket and/or a rain sensor bracket connected to the mounting bracket.

A vehicle includes a vehicle window glass, a lidar, and the lidar built-in mounting device, the substrate is fixedly connected to the inner surface of the vehicle window glass, the lidar is mounted on the mounting surface of the support, the lidar is oriented toward the vehicle window glass, and a detection signal transmitted and received by the lidar pass through the vehicle window glass.

In one embodiment, the vehicle further includes a camera and/or a rain sensor, the camera is mounted on the lidar built-in mounting device and/or the rain sensor is mounted on the lidar built-in mounting device.

The details of one or more embodiments of the application are set forth in the accompanying drawings and the description below. Other features, objects, and advantages of the application will be apparent from the description and drawings, and from the claims.

### BRIEF DESCRIPTION OF THE DRAWINGS

FIG. 1 is a schematic structural view of a lidar built-in mounting device of the present application mounted on a vehicle window glass.
FIG. 2 is a front view of a lidar built-in mounting device according to a first embodiment of the present application.
FIG. 3 is a right sectional view of the lidar built-in mounting device shown in FIG. 2.
FIG. 4 is an isometric view of a second surface of the lidar built-in mounting device shown in FIG. 2.
FIG. 5 is an isometric view of a first surface of the lidar built-in mounting device shown in FIG. 2.
FIG. 6 is a front view of a lidar built-in mounting device according to a second embodiment of the present application.
FIG. 7 is an isometric view of a second surface of the lidar built-in mounting device shown in FIG. 6.
FIG. 8 is an isometric view of a first surface of the lidar built-in mounting device shown in FIG. 6.
FIG. 9 is an isometric view of a second surface of a lidar built-in mounting device according to a third embodiment of the present application.
FIG. 10 is an isometric view of a first surface of the lidar built-in mounting device shown in FIG. 9.
FIG. 11 is an isometric view of a second surface of a lidar built-in mounting device according to a fourth embodiment of the present application.
FIG. 12 is a schematic structural view of a lidar built-in mounting device the present application with an avoidance member and a connecting base.

### DETAILED DESCRIPTION OF THE EMBODIMENTS

In order to make the above objects, features and advantages of the present application clear and easier to understand, the specific embodiments of the present application are described in detail below in combination with the accompanying drawings. Many specific details are set forth in the following description to facilitate a full understanding of the present application. However, the present application can be implemented in many ways different from those described herein, and those skilled in the art can make similar improvements without departing from the connotation of the present application. Therefore, the present application is not limited by the specific embodiments disclosed below.

There are many technical difficulties in fully integrating a lidar mounted outside of a vehicle onto an interior surface of a front windshield in the related art. According to the inventor's research, the reason for the problem is that the conventional technical means is to directly mount the lidar on the conventional front camera bracket. Compared with the vehicle-mounted camera, the size and weight of the lidar are larger, so that the mounting stability of the lidar is poor, and there is also a large resonance noise, or the accuracy of the detection signal cannot be guaranteed.

Based on the above reasons, the present application provides a lidar built-in mounting device and a vehicle, which can stably mount the lidar on a side of a vehicle window glass facing an interior of the vehicle, and can ensure the accuracy of a detection signal.

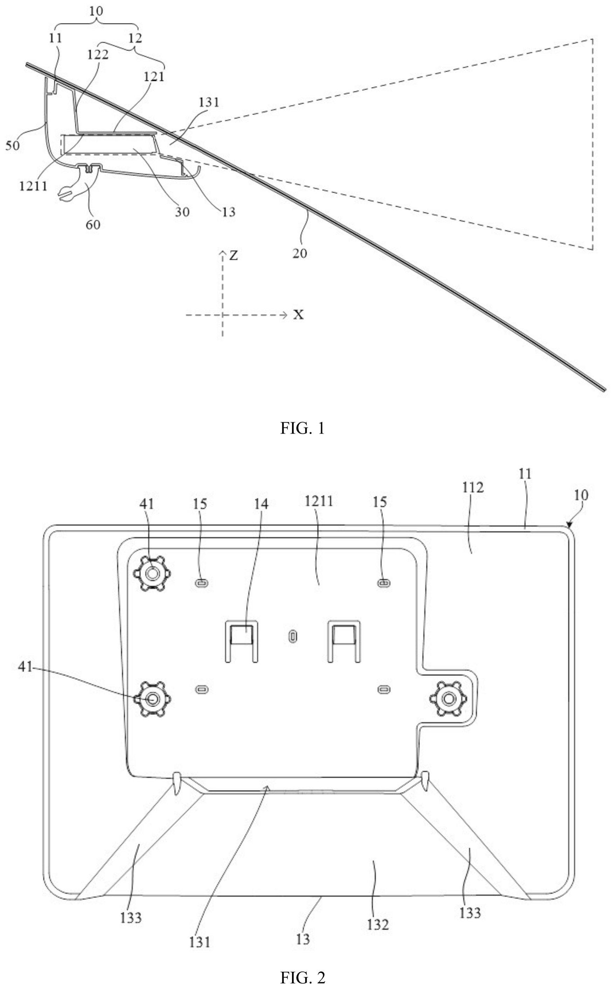

Referring to FIG. 1 to FIG. 5, the lidar built-in mounting device according to the present application is configured to fixedly mount a lidar 30 on an inner surface of a vehicle window glass 20. The lidar 30 has a signal transmitting end and a signal receiving end, the signal transmitting end is configured to transmit a detection signal, and the signal receiving end is configured to receive the detection signal. The lidar 30 is oriented toward the vehicle window glass 20, and the detection signal transmitted and received by the lidar 30 passes through the vehicle window glass 20. Specifically, the detection signal transmitted by the lidar 30 can pass through the vehicle window glass 20 to detect an environment outside a vehicle, and a part of the detection signal reflected by objects in the environment outside the vehicle can pass through the vehicle window glass 20 again to be received by the lidar 30, so that the lidar 30 can sense the environment outside the vehicle. A wavelength of the detection signal of the lidar 30 may be 905 nm, 1550 nm, or the like, for example. In FIG. 1, the exemplary vehicle window glass 20 is a front windshield, but is not limited thereto, and the vehicle window glass 20 may be a rear windshield, a side window glass, an A-pillar glass, a B-pillar glass, etc. A direction Z is a height direction of the vehicle, and a direction X is a travel direction of the vehicle.

Referring to FIG. 1 to FIG. 5, the lidar built-in mounting device according to a first embodiment of the present application includes a mounting bracket 10. The mounting bracket 10 includes a substrate 11 and a support 12 connected to the substrate 11. The substrate 11 has a first surface 111 and a second surface 112 opposite to each other. The first surface 111 is configured to be fixedly connected to the inner surface of the vehicle window glass 20, and the support 12 is provided on the second surface 112. The support 12 is provided with a mounting surface 1211 configured for mounting the lidar 30. Specifically, the first surface 111 is fixedly connected to the inner surface of the vehicle window glass 20 by adhesion, welding, etc.

It should be noted that the inner surface of the vehicle window glass 20 refers to a surface of the vehicle window glass 20 facing an interior of the vehicle, and an outer surface of the vehicle window glass 20 refers to a surface of the vehicle window glass 20 facing an exterior of the vehicle.

In the lidar built-in mounting device according to the present application, the first surface 111 of the substrate 11 is fixedly connected to the inner surface of the vehicle window glass 20, and the lidar 30 is fixedly mounted in the interior of the vehicle through the mounting surface 1211 of the support 12, so that the lidar 30 can be stably mounted on the inner surface of the vehicle window glass 20., and the detection accuracy of the lidar after being built in the interior of the vehicle can be ensured. Preferably, a minimum distance between the signal transmitting end of the lidar 30 and the inner surface of the vehicle window glass 20 is less than or equal to 8 mm, specifically 8 mm, 7 mm, 6 mm, 5 mm, 4 mm, 3 mm, 2 mm, 1 mm, and 0.5 mm, so that a distance between the lidar 30 and the vehicle window glass 20 is shortened, an optical path of the detection signal transmitted and received by the lidar through the vehicle window glass 20 is also correspondingly shortened, the absorption of the detection signal by the vehicle window glass 20 is reduced, and the detection accuracy of the lidar after being built in the interior of the vehicle is further improved. Meanwhile, when a field of view (FOV) detected by the lidar is determined, the distance between the lidar 30 and the vehicle window glass 20 is shortened, and an area of the vehicle window glass 20 through which the detection signals transmitted and received by the lidar pass is also correspondingly reduced, so that a film removal area of a thermal insulation coating additionally designed on the vehicle window glass 20 and a coverage area of an infrared anti-reflection film are correspondingly reduced, thereby reducing the design and production difficulty and cost of the vehicle window glass 20. Considering the assembly convenience between the mounting bracket 10, the vehicle window glass 20 and the lidar 30, it is further preferable that the minimum distance between the signal transmitting end of the lidar 30 and the inner surface of the vehicle window glass 20 ranges from 1 mm to 5 mm.

Referring to FIG. 2 to FIG. 4, the support 12 includes a mounting plate 121 and a supporting plate 122. The supporting plate 122 is fixedly connected between the mounting plate 121 and the substrate 11. The mounting plate 121 has the mounting surface 1211 located on a side of the second surface 112. The mounting surface 1211 and the second surface 112 forms an angle. Since the mounting surface 1211 and the second surface 112 form an angle, the lidar 30 mounted on the mounting surface 1211 is in a substantially horizontal state, that is, the lidar 30 is substantially parallel to the ground, thereby ensuring that the lidar 30 can stably detect the driving environment in front of the vehicle in a maximum range. The detection signal transmitted by the lidar 30 is incident on the inner surface of the vehicle window glass 20 at an incidence angle of 10° to 75°. In order to ensure that the lidar 30 can carry out normal detection operation, preferably, the vehicle window glass 20 has a transmittance of at least 80% for the detection signal incident at an incidence angle of 10° to 75°, specifically, for example, 80%, 81%, 82%, 83%, 84%, 85%, 86%, 87%, 88%, 89%, 90%, 91%, 92%, 93%, 94%, 95%, etc., and more preferably has a transmittance of at least 85%.

In order to ensure that the lidar 30 mounted on the mounting surface 1211 is in a substantially horizontal state, the angle between the mounting surface 1211 and the second surface 112 is preferably an acute angle, more preferably ranges from15° to 80°, specifically, for example, 15°, 20°, 25°, 30°, 35°, 40°, 45°, 50°*,* 55°*,* 60°, 65°, 70°, 75°, 80°, etc.

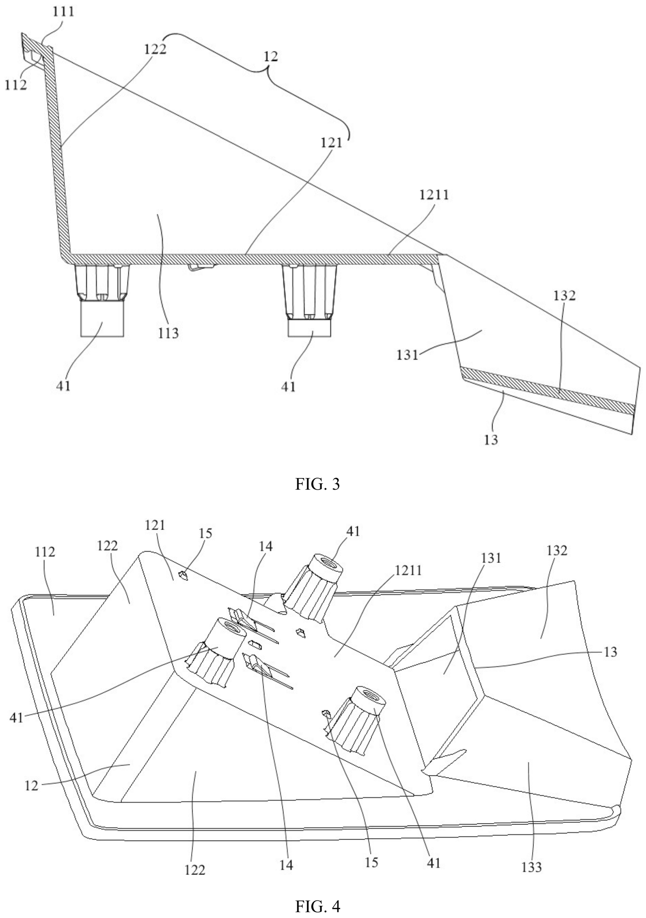

Referring to FIG. 3, FIG. 4 and FIG. 5, the substrate 11 is provided with an avoidance through hole, the mounting plate 121 and the supporting plate 122 enclose an avoidance space 113. The avoidance space 113 is in communication with the avoidance through hole. Specifically, a contour of the mounting plate 121 is connected to an opening edge of the avoidance through hole through the supporting plate 122, and the mounting surface 1211 is located on a side of the mounting plate 121 away from the avoidance space 113. Through the design of the avoidance through hole and the avoidance space 113, the lidar built-in mounting device uses less materials and has light weight, which is beneficial to further reducing vibration. Preferably, the substrate 11, the mounting plate 121, and the supporting plate 122 are integrally formed. Specifically, for example, thermoplastic resins such as polybutylene terephthalate (PBT), nylon 66 (PA66), and thermoplastic elastomer are molded by injection molding to make the substrate 11, the mounting plate 121, and the supporting plate 122 integrally molded, which has high processing efficiency, and that support 12 can be stably connected to the substrate 11. In an embodiment, the material of the supporting plate 122 may be different from the material of the substrate 11 and the material of the mounting plate 121. Specifically, the supporting plate 122 is of a telescopic elastic structure, for example, a polydimethylsiloxane (PDMS) elastomer with a threaded shape is selected, so as to adjust the angle formed by the mounting surface 1211 and the second surface 112, and then adjust the FOV of the lidar 30 in a vertical direction. The detection signal transmitted by the lidar 30 can be minimized to be reflected back by the vehicle window glass 20, and the transmittance of the detection signal can be increased, thereby improving the performance of the lidar 30.

In the present application, the substrate 11 may be a straight plate, a curved plate, etc. Since the vehicle window glass 20 is generally curved, when the substrate 11 is a curved plate, a radius of curvature of the substrate 11 is preferably greater than or equal to that of the vehicle. That is, a bending degree of the substrate 11 is less than or equal to a bending degree of the vehicle window glass 20, so that the mounting bracket 10 can be stably fixed to the inner surface of the vehicle window glass 20.

Referring to FIG. 2 to FIG. 4, in an embodiment, the mounting surface 1211 is provided with at least two connecting members 41 configured to fix the lidar 30 on the mounting surface 1211. The connecting member 41 may be, but is not limited to, a welding member, an adhesive member, or a threaded connecting member. Preferably, the connecting member 41 is a threaded connecting member, and the threaded connection has the advantages of easy assembly, convenient disassembly, simple operation, etc., and can be exemplified by bolt connection, screw connection, etc.

In FIG. 2, FIG. 3 and FIG. 4, the connecting member 41 includes at least three assembly holes, which are threaded holes. The mounting surface 1211 is provided with three columns spaced apart, each column is provided with one threaded hole, and an axis of each threaded hole is perpendicular to the mounting surface 1211. The lidar 30 is stably fixed on the mounting surface 1211 through bolts and the threaded holes. Preferably, the bolt may be a vibration-damping bolt, which can also prevent the lidar 30 and the support 12 from resonating with each other, thereby providing vibration damping to the lidar 30 on the mounting surface 1211. It is not limited to this, and the connecting member may be a plurality of studs spaced apart on the mounting surface 1211, and the studs cooperate with the nuts to stably fix the lidar 30 on the mounting surface 1211.

Specifically, the vibration-damping bolt is composed of a screw rod and a rubber column. The screw rod is provided with a screw rod head with a diameter larger than that of the screw rod, the screw rod head of the screw rod is embedded into two ends of the rubber column, an end surface of the screw rod head adjacent to threads is coplanar with or slightly protrudes from an end surface of the rubber column, and the screw rod at both ends of the rubber column are coaxial. The rubber column may be sufficiently large or thick to enhance the vibration damping effect on the lidar 30.

Referring to FIGS. 1 to 4, in an embodiment, the mounting bracket 10 is provided with a first light shielding cover 13 connected to the substrate 11. The first light shielding cover 13 is provided on the second surface 112 and protrudes upward in a direction away from the second surface 112. The first light shielding cover 13 encloses a light transmission channel 131, and the detection signals transmitted and received by the lidar 30 pass through the vehicle window glass 20 through the light transmission channel 131.

The light transmission channel 131 has a light inlet and a light outlet opposite to each other. The light inlet extends through the first surface 111 and the second surface 112, and is arranged corresponding to the signal transmitting end and the signal receiving end of the lidar 30. The light outlet extends to the inner surface of the vehicle window glass 20, so that the detection signal transmitted from the signal transmitting end of the lidar 30 mounted on the mounting surface 1211 sequentially passes through the light inlet, the light outlet and the vehicle window glass 20 to the outside of the vehicle, and the reflected detection signal successively passes through the vehicle window glass 20, the light outlet and the light inlet to the receiving end of the lidar. The first light shielding cover 13 has a light shielding effect, which can reduce the signal loss in the optical path and prevent stray light interference.

Specifically, the first light shielding cover 13 is a U-shaped panel. The first light shielding cover 13 includes a light shielding bottom plate 132 and two light shielding side plates 133. The light shielding bottom plate 132 is connected to the second surface 112 through the two light shielding side plates 133, and the light shielding bottom plate 132 and the two light shielding side plates 133 enclose the light transmission channel 131. Preferably, an angle between the light shielding bottom plate 132 and the second surface 112 is less than an angle between the mounting surface 1211 and the second surface 112, which can meet the use requirement of the FOV of the lidar 30 to the greatest extent. Specifically, for example, the angle between the light shielding bottom plate 132 and the second surface 112 is an acute angle and is less than an acute angle between the mounting surface 1211 and the second surface 112. Alternatively, the angle between the light shielding bottom plate 132 and the second surface 112 is zero, that is, the light shielding bottom plate 132 and the second surface 112 are parallel to each other.

In an embodiment, the lidar built-in mounting device further includes a heating member (not shown) provided on the first light shielding cover 13. Specifically, the heating member may be adhered to a surface of the light shielding bottom plate 132 and/or the light shielding side plate 133 away from the light transmission channel 131, or may be integrated into the light shielding bottom plate 132 and/or the light shielding side plate 133. In this way, the first light shielding cover 13 is heated by the heating member, and the generated heat can be radiated into the light transmission channel 131, so that a FOV space between the lidar 30 and the vehicle window glass 20 is heated, the effect of defogging is achieved, the influence of water mist on the detection signal is eliminated, and the detection accuracy of the lidar 30 is improved.

The heating member includes, but is not limited to, a heating sheet, a heating wire, a heating rod, etc. Specifically, the heating member is provided as a heating plate, and a power of the heating plate is controlled at, for example, 0.1 W/cm² to 15 W/cm².

Referring to FIG. 2 and FIG. 4, the mounting surface 1211 is provided with at least one elastic member 14 configured to abut against the lidar 30. A force generated by the connecting member 41 keeps the lidar 30 against the mounting surface 1211, and a force generated by the elastic member 14 keeps the lidar 30 away from the mounting surface 1211. When mounted on the mounting surface 1211, the lidar 30 abuts against the elastic member 14, and the elastic member 14 serves as a support to compensate for a lock attachment positioning error, so as to avoid assembly clearance and shaking in the direction Z. Optionally, the elastic member 14 includes, but is not limited to, a spring sheet structure. Specifically, at least a portion of the elastic member 14 extends to the first surface 111. The elastic member 14 protrudes from the second surface 112 by a certain height when there is no pressure from the lidar 30, and is coplanar with the second surface 112 or protrudes by a less height when there is a pressure from the lidar 30.

Referring to FIG. 2 and FIG. 4, the mounting surface 1211 is provided with at least one protrusion 15 configured to abut against the lidar 30. The force generated by the connecting member 41 keeps the lidar 30 abutted against the mounting surface 1211, and a force generated by the protrusion 15 makes the lidar 30 away from the mounting surface 1211. The protrusion 15 abuts against the lidar 30 mounted on the mounting surface 1211. A height of the protrusion 15 is less than or equal to 2 mm, for example, 2 mm, 1.5 mm, 1 mm, 0.8 mm, 0.5 mm, 0.3 mm, 0.1 mm, etc. Preferably, the height of the protrusion 15 ranges from 0.1 mm to 0.5 mm, so that there is a small gap between the lidar 30 and the mounting surface 1211, thereby providing a buffering and vibration damping effect.

In some embodiments, the mounting bracket 10 is made of metal or thermoplastic resin. The metal may be a metal material such as iron, zinc, aluminum, or stainless steel, or an alloy material. Exemplarily, the mounting bracket 10 is made of zinc alloy. The thermoplastic resin may be a material such as polybutylene terephthalate (PBT), nylon 66 (PA66), and thermoplastic elastomer (TPE). Exemplarily, the mounting bracket 10 is specifically selected from polybutylene terephthalate (PBT + GF30) doped with glass fibers. Thus, it has been found that the use of thermoplastic resins can reduce resonance, thereby greatly reducing noise.

Through a large number of experimental studies, the lidar built-in mounting device in this embodiment is suitable for the lidar 30 having a weight of less than or equal to 500 g and/or a volume size of less than or equal to 300 mm (length) * 200 mm (width) * 50 mm (height). The lidar 30 may be a 905 nm lidar or a 1550 nm lidar.

Referring to FIG. 1, the lidar built-in mounting device further includes a shielding cover 50 fixedly mounted on the inner surface of the vehicle window glass 20, the shielding cover 50 is configured to cover the lidar 30 and the mounting bracket to improve the aesthetics of the interior of the vehicle and to protect the lidar 30. The shielding cover 50 is preferably made of thermoplastic resin, and the thermoplastic resin may be a material such as polybutylene terephthalate (PBT), nylon 66 (PA66), thermoplastic elastomer (TPE), polypropylene (PP), etc.

Referring to FIG. 1, the lidar built-in mounting device further includes a connecting base 60. The connecting base 60 is connected to an outer wall of the shielding cover 50, and the connecting base 60 is configured for mounting a rearview mirror (not shown). In this way, the lidar built-in mounting device can be used not only to mount the lidar 30, but also to mount the rearview mirror to integrate the rearview mirror function. Specifically, the connecting base 60 may be adhered and fixed to the outer wall of the shielding cover 50, or may be fixed to the outer wall of the shielding cover 50 by fasteners such as bolts, nuts, screws, pins, rivets, etc.

In another embodiment, an electronic display screen is provided on the outer wall of the shielding cover 50. In this way, the electronic display screen can not only provide an electronic display function and a voice playing function, but also integrate the rearview mirror function. There is no need to additionally mount the rearview mirror in the vehicle, which helps to save the mounting space in the vehicle. Specifically, the electronic display screen may be embedded on the outer wall of the shielding cover 50 to form an integrated structure with the shielding cover 50.

In yet another embodiment, the lidar built-in mounting device further includes a connecting base 60. The connecting base 60 is configured to mount a rearview mirror. The shielding cover 50 is provided with an opening (not shown), and the connecting base 60 extends into the shielding cover 50 through the opening and is connected to the mounting bracket 10. In this way, the lidar built-in mounting device can be used not only to mount the lidar 30, but also to mount the rearview mirror to integrate the rearview mirror function.

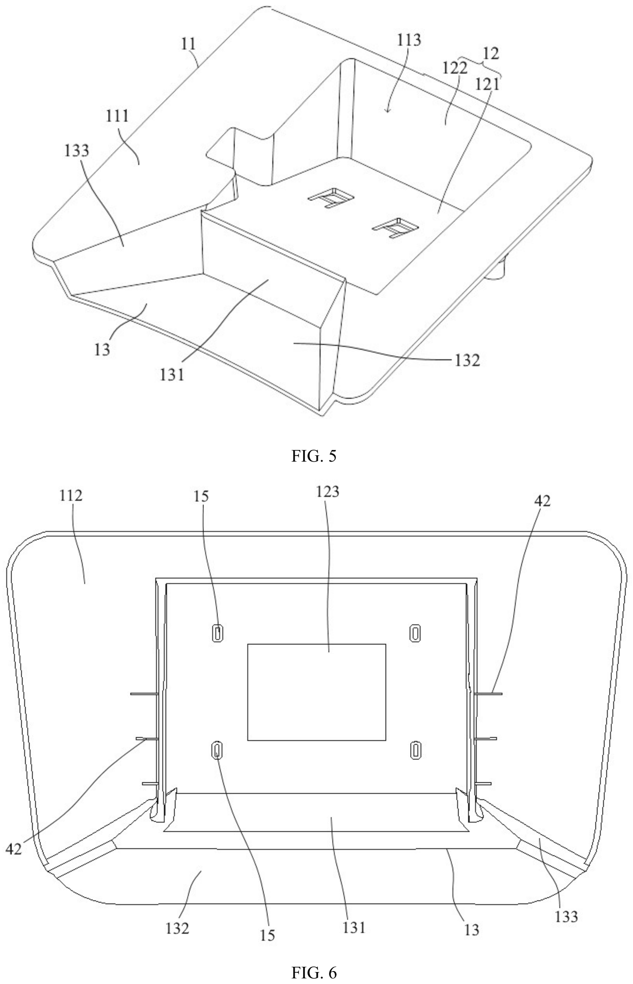

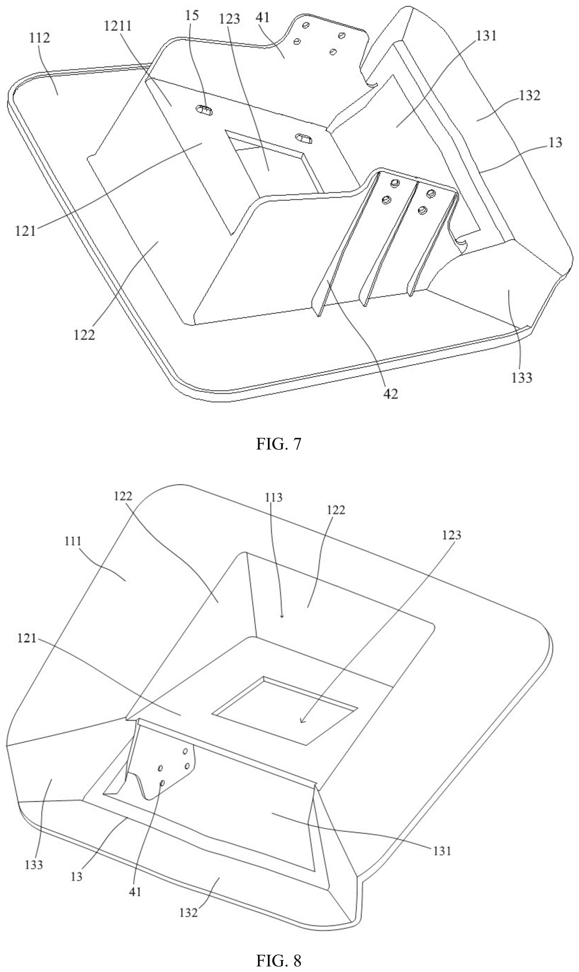

Referring to FIGS. 6 to 8, the mounting bracket 10 provided in a second embodiment is substantially the same as the mounting bracket provided in the first embodiment, and also includes the substrate 11, the support 12, and the first light shielding cover 13. In the second embodiment, the connecting member 41 is at least four assembly holes, and the assembly holes are unthreaded holes. The mounting surface 1211 is provided with two vertical plates opposite to each other, each vertical plate is provided with four unthreaded holes, and an axis of each unthreaded hole is parallel to the mounting surface 1211. The lidar 30 is stably fixed on the mounting surface 1211 by bolts extending through the unthreaded holes and threaded holes of nuts or the lidar. In order to maintain the stability of the mounting of the lidar 30, at least three reinforcing rib plates 42 are provided on a side of each vertical plate away from the mounting surface 1211. Preferably, the bolt may be a vibration-damping bolt, which can also prevent the lidar 30 and the support 12 from resonating with each other, thereby providing vibration damping to the lidar 30 on the mounting surface 1211.

In FIG. 6 to FIG. 8, since the lidar 30 generates vibration with a certain frequency during operation, the mounting plate 121 is provided with at least one vibration-damping through hole 123. The vibration-damping through hole 123 can reduce a contact area between the lidar 30 and the support 12, thereby reducing resonance with the mounting bracket 10, and further reducing noise. It should be understood that at least one vibration-damping through hole 123 may be separately formed in the supporting plate 122, or at least one vibration-damping through hole 123 may be formed in both the mounting plate 121 and the supporting plate 122.

In some embodiments, a ratio of an area S1 of the vibration-damping through hole 123 to an area S2 of the mounting surface 1211 is between 1/5 and 3/4. In this embodiment, the ratio of the area S1 of the vibration-damping through hole 123 to the area S2 of the mounting surface 1211 can be optimally adjusted according to a value of the NVH of the selected lidar 130. Preferably, when the value of the NVH of the lidar 130 is equal to or greater than 25 db, the ratio of the area S1 of the vibration-damping through hole 123 to the area S2 of the mounting surface 1211 is between 1/4 and 3/4, specifically, for example, 1/4, 2/7, 1/3, 2/5, 1/2, 3/5, 5/8, 2/3, 7/10, 3/4, etc. Preferably, when the value of the NVH of the lidar 130 is equal to or greater than 25 db, the ratio of the area S1 of the vibration-damping through hole 123 to the area S2 of the mounting surface 1211 is between 1/5 and 2/3, specifically, for example, 1/5, 1/4, 2/7, 3/10, 1/3, 2/5, 1/2, 3/5, 5/8, 2/3, etc. It should be noted that the NVH is an acronym for Noise, Vibration and Harshness. The value of the NVH of the lidar 130 refers to a comprehensive value of various indexes such as noise, vibration, and comfort. When only one vibration-damping through hole 123 is provided, the area S1 of the vibration-damping through hole 123 is equal to the area of the single vibration-damping through hole 123; When a plurality of vibration-damping through holes 123 are provided, the area S1 of the vibration-damping through holes 123 is equal to the total area of the plurality of damping through holes 123.

In some embodiments, not only the lidar 30 but also the camera and/or the rain sensor are required to be mounted on the vehicle window glass 20, so that a composite multifunctional mounting bracket 10 is required to be designed. The lidar built-in mounting device further includes a camera bracket and/or a rain sensor bracket connected to the mounting bracket 10.

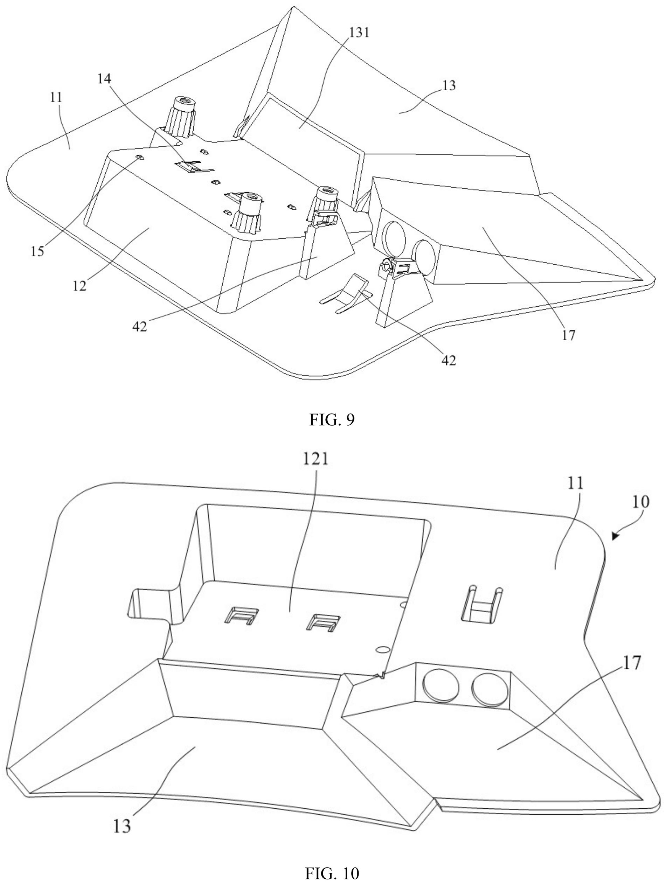

Referring to FIGS. 9 and 10, the mounting bracket 10 provided in a third embodiment is substantially the same as the mounting bracket provided in the first embodiment, and also includes the substrate 11, the support 12, and the first light shielding cover 13. In the third embodiment, the lidar built-in mounting device further includes a camera bracket 42 connected to the mounting bracket 10, and the camera bracket 42 is configured to fix a camera (not shown). It should be understood that the lidar built-in mounting device further includes a rain sensor bracket (not shown) configured to fix a rain sensor (not shown in the figure). Optionally, the camera bracket 42 and the rain sensor bracket may each include, but are not limited to, buckles, bolts, pins, rivets, adhesives, etc. In addition, the respective numbers of the camera bracket 42 and the rain sensor bracket are adjusted and set according to actual requirements.

In some embodiments, the camera and the lidar 30 may be arranged in a left-right adjacent manner, and the camera bracket 42 and the support 12 are also arranged in a left-right adjacent manner. Correspondingly, the mounting bracket 10 is further provided with a second light shielding cover 17, which is configured to reduce or even eliminate the interference of stray light when the camera acquires image information outside the vehicle through the vehicle window glass 20, so as to improve the quality of the acquired image information outside the vehicle.

In other embodiments, the camera and the lidar 30 may be arranged in an up-and-down stacking manner, and the camera bracket 42 and the support 12 may be arranged in an up-and-down stacking manner. Specifically, the camera bracket 42 may be provided on the support 12, and this assembly relationship may minimize a spatial arrangement distance between the lidar 30 and the camera, thereby reducing an area of the substrate 11 of the mounting bracket 10, and then reducing the occupation of a top space of the vehicle window glass 20 by the lidar 30 and the camera.

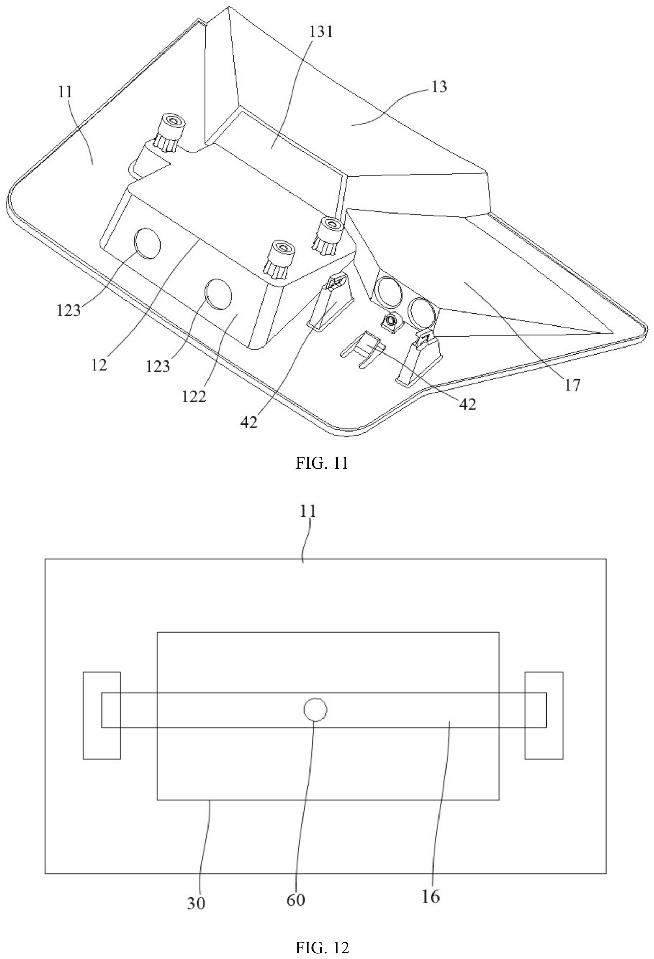

Referring to FIG. 11, the mounting bracket 10 provided in a fourth embodiment is substantially the same as the mounting bracket provided in the third embodiment, and also includes the substrate 11, the support 12, the first light shielding cover 13, the camera bracket 42, and the second light shielding cover 17. In the fourth embodiment, the supporting plate 122 is provided with at least two damping through holes 123, and the vibration-damping through holes 123 are circular holes. It should be understood that the vibration-damping through hole 123 described in the present application may alternatively be a rectangular hole, a triangular hole, an elliptical hole, etc.

Referring to FIG. 12, the mounting bracket 10 is provided with an avoidance member 16 that crosses the lidar 30. Opposite ends of the avoidance member 16 are respectively located on opposite sides of the lidar 30 and are connected to the substrate 11. The avoidance member 16 is connected to the connecting base 60. The connecting base 60 is configured for mounting a rearview mirror. The shielding cover 50 is provided with an opening (not shown), and the connecting base 60 extends into the shielding cover 50 through the opening and is connected to the mounting bracket 10. The connection between the opposite ends of the avoidance member 16 and the substrate 11 includes but is not limited to adhesion, clamping, bolts, pins, rivets, etc. In some embodiments, the avoidance member 16 may be made of a metallic material or a non-metallic material. In this embodiment, a metal material is preferred, such as cast aluminum, so as to ensure the strength of the overall structure.

Referring to FIG. 1, the present application further provides a vehicle. The vehicle includes a vehicle window glass 20, a lidar 30, and the above-mentioned lidar built-in mounting device. The substrate 11 is fixedly connected to the inner surface of the vehicle window glass 20, the lidar 30 is mounted on the mounting surface 1211 of the support 12, the lidar 30 is oriented toward the vehicle window glass 20, and the detection signal transmitted and received by the lidar 30 passes through the vehicle window glass 20. The lidar 30 is fixedly mounted in the interior of the vehicle through the lidar built-in mounting device, so that the lidar 30 can be stably mounted on the inner surface of the vehicle window glass 20, and the detection accuracy of the lidar 30 after being built in the interior of the vehicle can be ensured.

In some embodiments, at least one of the outer surface and the inner surface of the vehicle window glass 20 is further provided with an infrared anti-reflection structure (not shown). The infrared anti-reflection structure covers at least the area where the detection signal passes through the vehicle window glass 20, and the detection signal can pass through the vehicle window glass 20 and the infrared anti-reflection structure. Due to the existence of the infrared anti-reflection structure, the reflectivity of the vehicle window glass 20 to the detection signal can be further reduced, so that the area covered by the infrared anti-reflection structure has higher transmittance to the detection signal than other uncovered areas of the vehicle window glass 20, thereby improving the local signal transmission quality of the vehicle vehicle window glass 20 more pertinently, which is conducive to improving the development trend of intelligent driving of vehicles using the vehicle window glass 20. The infrared anti-reflection structure may be, for example, an infrared anti-reflection coating film, an infrared anti-reflection film, an infrared anti-reflection ion implantation layer, an infrared anti-reflection etching concave-convex structure, etc., which performs anti-reflection for the wavelength (for example, 905 nm, 1550 nm) of the detection signal.

In some embodiments, the vehicle further includes a camera and/or a rain sensor. The camera is mounted on the lidar built-in mounting device, and/or the rain sensor is mounted on the lidar built-in mounting device.

It should be noted that the support 12 may be a part of the substrate 11, that is, the support 12 may be integrally formed with other parts of the substrate 11, or the support 12 may be an independent member separable from other parts of the substrate 11, that is, the support 12 may be independently formed and then combined with the other parts of the substrate 11 into a whole.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present application, if the term "a plurality of" appears, "a plurality of" means at least two, such as two, three, etc., unless otherwise expressly and specifically defined.

The foregoing descriptions are merely specific embodiments of the present application, and the description thereof is relatively specific and detailed, but are not intended to limit the protection scope of the present application. Any variation or replacement readily figured out by a person skilled in the art within the technical scope disclosed in the present application shall all fall within the protection scope of the present application. Therefore, the protection scope of the present application shall be subject to the protection scope of the appended claims.

## Claims

1. A lidar built-in mounting device, comprising a mounting bracket, the mounting bracket comprising a substrate and a support connected to the substrate, the substrate having a first surface and a second surface arranged opposite to each other, the first surface being configured to be fixedly connected to an inner surface of a vehicle window glass, the support being provided on the second surface, and the support being provided with a mounting surface configured for mounting a lidar.

2. The lidar built-in mounting device according to claim 1, wherein the support comprises a mounting plate and a supporting plate, the supporting plate is fixedly connected between the mounting plate and the substrate, the mounting plate has the mounting surface located on a side of the second surface, and the mounting surface and the second surface form an angle.

3. The lidar built-in mounting device according to claim 2, wherein the angle between the mounting surface and the second surface ranges from 15° to 80°.

4. The lidar built-in mounting device according to claim 2 or 3, wherein the substrate is provided with an avoidance through hole, the mounting plate and the supporting plate enclose an avoidance space in communication with the avoidance through hole.

5. The lidar built-in mounting device according to any one of claims 2 to 4, wherein the mounting plate and/or the supporting plate is provided with at least one vibration-damping through hole..

6. The lidar built-in mounting device according to claim 5, wherein a ratio of an area S1 of the vibration-damping through hole to an area S2 of the mounting surface is between 1/5 and 3/4.

7. The lidar built-in mounting device according to claim 6, wherein when a value of a NVH value of the lidar is equal to or greater than 25 db, the ratio of the area S1 of the vibration-damping through hole to the area S2 of the mounting surface is between 1/4 and 3/4.

8. The lidar built-in mounting device according to claim 6 or 7, wherein when the value of the NVH of the lidar is equal to or greater than 25 db, the ratio of the area S1 of the vibration-damping through hole to the area S2 of the mounting surface is between 1/5 and 2/3.

9. The lidar built-in mounting device according to any one of claims 1 to 8, wherein the mounting surface is provided with a connecting member configured to fix the lidar on the mounting surface, and the connecting member is a welding member, an adhesive member, or a threaded connecting member.

10. The lidar built-in mounting device according to any one of claims 1 to 9, wherein the mounting surface is provided with at least one elastic member and/or at least one protrusion configured to abut against the lidar.

11. The lidar built-in mounting device according to any one of claims 2 to 8, wherein the mounting bracket is provided with a first light shielding cover connected to the substrate, the first light shielding cover is provided on the second surface and protrudes upwards in a direction away from the second surface, the first light shielding cover encloses a light transmission channel, and a detection signal transmitted and received by the lidar pass through the vehicle window glass through the light transmission channel.

12. The lidar built-in mounting device according to claim 11, further comprising a heating member provided on the first light shielding cover.

13. The lidar built-in mounting device according to claim 11 or 12, wherein the first light shielding cover comprises a light shielding bottom plate, and an angle between the light shielding bottom plate and the second surface is less than the angle between the mounting surface and the second surface.

14. The lidar built-in mounting device according to any one of claims 1 to 13, further comprising a shielding cover fixedly mounted on the inner surface of the vehicle window glass, wherein the shielding cover is configured to cover the lidar and the mounting bracket.

15. The lidar built-in mounting device according to claim 14, wherein an electronic display screen is provided on an outer wall of the shielding cover.

16. The lidar built-in mounting device according to claim 14 or 15, further comprising a connecting base configured for mounting a rearview mirror.

17. The lidar built-in mounting device according to any one of claims 1 to 16, wherein a minimum distance between a signal transmitting end of the lidar and the inner surface of the vehicle window glass is less than or equal to 8 mm.

18. The lidar built-in mounting device according to any one of claims 1 to 17, further comprising a camera bracket and/or a rain sensor bracket connected to the mounting bracket.

19. A vehicle, comprising a vehicle window glass, a lidar, and the lidar built-in mounting device according to any one of claims 1 to 18, wherein the substrate is fixedly connected to the inner surface of the vehicle window glass, the lidar is mounted on the mounting surface of the support, the lidar is oriented toward the vehicle window glass, and a detection signal transmitted and received by the lidar pass through the vehicle window glass.

20. The vehicle according to claim 19, further comprising a camera and/or a rain sensor, wherein the camera is mounted on the lidar built-in mounting device, and/or the rain sensor is mounted on the lidar built-in mounting device.
